Europäisches Patentamt

European Patent Office

Office européen des brevets

(11) Publication number: **0 301 281**
A2

# EUROPEAN PATENT APPLICATION

(21) Application number: 88110761.9

(51) Int. Cl.⁴: **B60N 1/12**

(22) Date of filing: 06.07.88

(30) Priority: 29.07.87 IT 6766187

(43) Date of publication of application:
01.02.89 Bulletin 89/05

(84) Designated Contracting States:
AT DE ES FR GB NL SE

(71) Applicant: VALLKO S.r.l.
Via Valeggio, 41
I-10129 Torino(IT)

(72) Inventor: Lelio, Alfonso
Largo Sempione, 176
I-10155 Torino(IT)

(74) Representative: Lotti, Giorgio
c/o Ing. Barzanò & Zanardo Milano S.p.A. Via
Cernaia 20
I-10122 Torino(IT)

(54) Children seat that can be assembled on motor vehicle.

(57) A seat for children that can be assembled on motor vehicle seats of the type consisting of a cushion hinged from behind to a back, which in turn is pivoted according to a transversal axis to a stiff stable supporting frame of the children seat to the seat of the motor car, foresees that the frame be decomposable into two separable elements in correspondence with the hinging of the cushion and of the back of the children seat, so that both the back and the vertical frame can be completely reclined to a substantially horizontal position; the hinging between the back of the seat and the vertical frame is obtained in a higher position with respect to the cross median section of the surface of same back; manual operating devices for the accomplishment of the translation along the base frame of the cushion of the children seat are also foreseen, and manual operating devices for the variation of the base frame inclination with respect to the cushion of the motor car seat in order to keep the frame vertical and resting against the seat back.

Fig. 1

## CHILDREN SEAT THAT CAN BE ASSEMBLED ON MOTOR VEHICLE SEATS

Subject of the invention is a seat for children that can be assembled on motor vehicles.

Purpose of the invention is to propose a seat having the following features:

a) possibility of overturning the supporting frame and the back with respect to the seat, so as to have the maximum reduction of the dimensions of the children seat in order to facilitate the storage in the luggage compartment of motor vehicles, the forwarding and the packing;

b) possibility of adjustment and accommodation of the children seat to motor vehicle seats having any type of angle between the back and the cushion so as to keep the children seat adherent to both of them;

c) possibility of varying the position of the cushion of the children seat with respect to that of the motor vehicle, according to one's needs, varying in the meantime the reclining angle of the back; this to increase the child's safety and comfort, according to circumstances;

d) the hinging point of the back of the children seat to its frame is fixed in a high position so that the back resting plane be adherent to the back of the motor vehicle seat and to permit the placing of safety belts connection in that hinging point, according to the rules of some countries.

For the above purposes and others that will be better understood as the description follows, the invention proposes to realize a children seat that can be assembled on motor vehicle seats, of the type consisting of a cushion hinged from behind to a back, which in turn is pivoted according to a transversal axis to a stiff stable supporting frame of the children seat to the seat of the motor car, characterized in that the frame is decomposable into two separable elements in correspondence with the hinging of the cushion with the back of the children seat, so that both the back and the vertical frame can be completely reclined to a substantially horizontal position; the hinging between the back of the seat and the vertical frame is obtained in a higher position with respect to the cross median section of the surface of same back; manual operating devices for the accomplishment of the translation along the base frame of the cushion of the children seat are also foreseen, and manual operating devices for the variation of the base frame inclination with respect to the cushion of the motor car seat in order to keep the frame vertical and resting against the seat back.

A description of the invention now follows, and reference is made to the enclosed drawings:

Figures 1 and 2 are respectively the side and front views of the children seat,

Figure 1a is the enlarged view of a particular of figure 1,

Figure 3 is the side view of the children seat of Fig. 1 when overturned,

Figure 4 is the schematic side view of the children seat in two different inclination positions,

Figure 5 is the same view as figure 1, the full line indicates the forward translated position of the cushion and the reclined position of the back,

Figure 6 is the section view according to the mark VI-VI of Figure 5,

Figure 7 is the plan view of the children seat,

Figure 8 is the side view of the children seat in a different position,

Figure 9 is the front partial view of the children seat in the position illustrated in Figure 8.

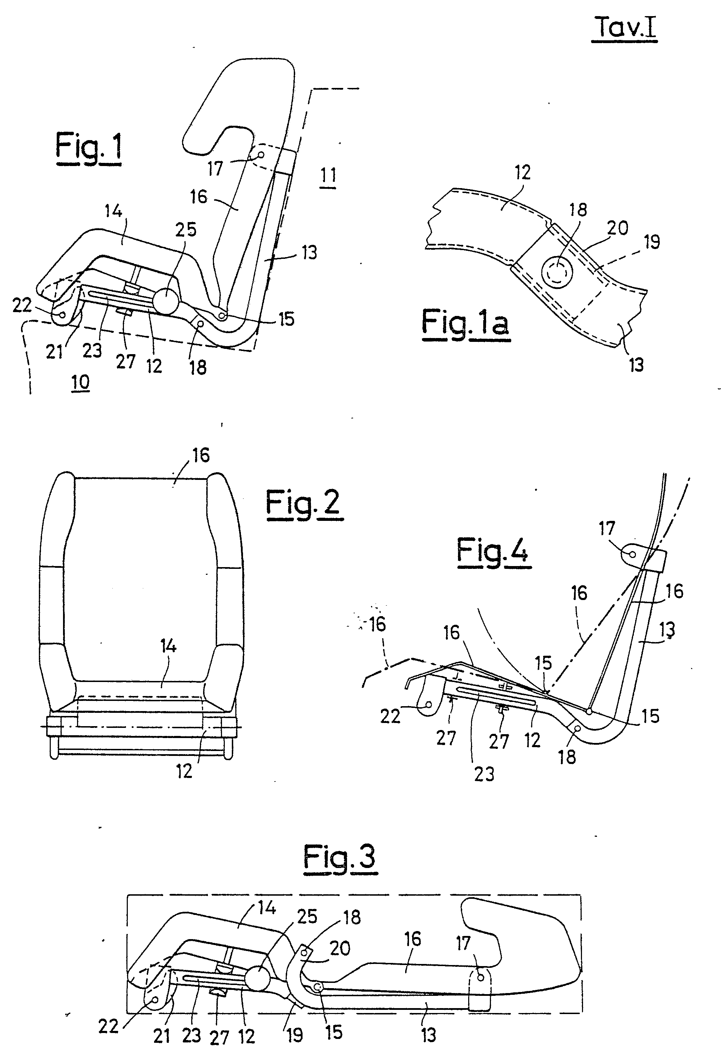

In the enclosed drawings the seat of a motor car is illustrated by a dashed line and number 10 indicates the cushion and 11 the seat back. On the said motor car seat the children seat according to the invention is assembled; it comprises a framework consisting of a base frame 12 and a vertical frame 13. On such framework a cushion 14 is fixed which is hinged in 15 to a back 16. This latter one is in turn pivoted in 17 to the vertical frame 13, whilst the frames 12 and 13 are reciprocally restrained at their ends 19 and 20 where they are stiffly connected by means of an extractable pin 18 (Fig 1a). As it can be noticed in Figure 1, 1a and 3, when extracting the pin 18 from the coupled seatings of the frames 12 and 13, these latter ones can be extracted at the ends so that the children seat may be overturned to the horizontal extended position shown in Figure 3 in order that little space is occupied by it, facilitating the insertion in the luggage compartment of a motor car and the packing in case of storage and transportation.

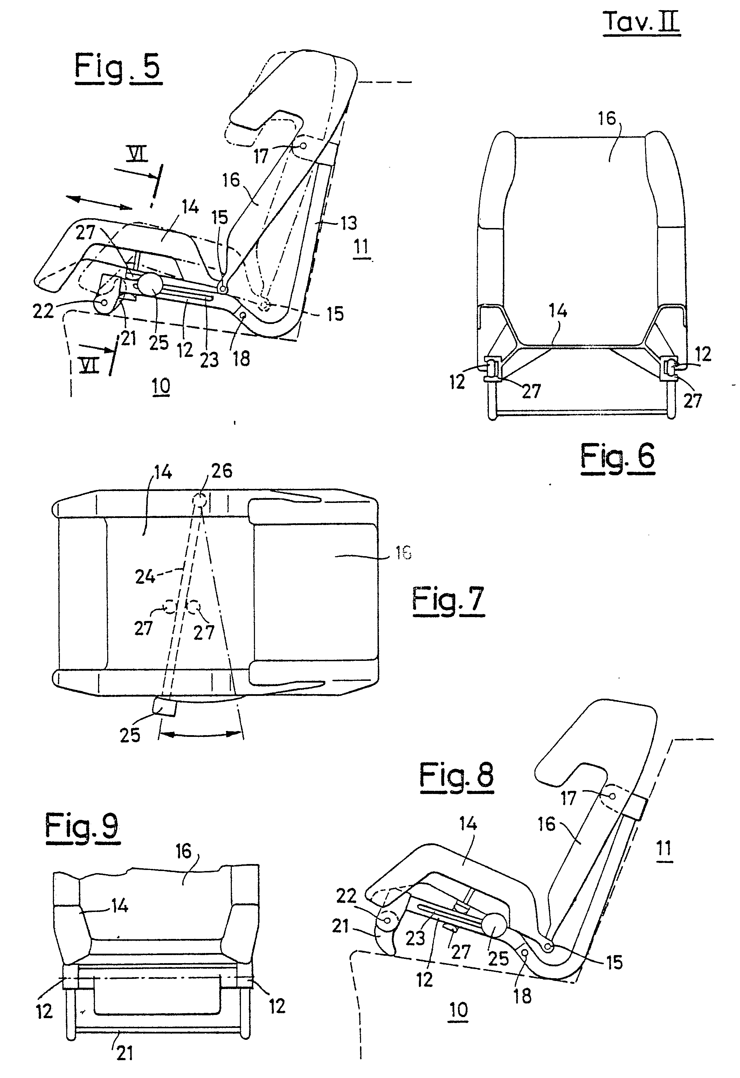

The front of the base frame 12 is equipped with a handle 21 which is hinged at 22 to brackets of said frame. The handle turns around its hingings 22, is manually operated and it is equipped with clutch devices or teeth which are engaged in toothings of the bracket so that different positions with respect to the frame 12 may be obtained, up to the last position illustrated in Fig. 8. An adjustment and accommodation of the children seat to any type of motor car seat is realized by this solution, that is, no matter what the angle between the cushion 10 and back 11 is, the children seat can be firmly fastened to both of them.

In the frame 12 a slot 23 is obtained, into which a pin 24 slides (Fig. 7) which is equipped with an external handgrip 25. The pin 24 is hinged at 26 from the opposite side of the frame 12 and is contained - in a sliding way - between two small cylinders 27 that are integral to the cushion 14 of the children seat. This latter one is also equipped with side sliding shoes 27 on the frame 12 which acts as guide for such sliding shoes.

When the handgrip 25 slides along the slot 23, the pin 24 rotates around the pivot 26 driving the cylinders 27 to slide and with them the cushion 14 which slides along the guides 12 with its brackets 27. The position of the child is thus varied by modifying the inclination of the back 16 and the position of the cushion 14, as illustrated in Figure 5 and schematized in Figure 4, whilst the back 16 rotates around the hinging 17 to the vertical frame 13.

## Claims

1. Seat for children that can be assembled on motor vehicle seats of the type consisting of a cushion hinged from behind to a back, which in turn is pivoted according to a transversal axis to a stiff stable supporting frame of the children seat to the seat of the motor car characterized in that the frame is decomposable into two separable elements in correspondence with the hinging of the cushion and of the back of the children seat in order to recline completely both the seat back and the vertical frame to a substantially horizontal position; the hinging between the back of the children seat and the vertical frame is obtained in a higher position with respect to the cross median section of the surface of same back; manual operating devices for the accomplishment of the translation along the base frame of the cushion of the children seat are also foreseen, and so are manual operating devices for the variation of the base frame inclination with respect to the cushion of the motor car seat in order to keep the frame vertical and resting against the seat back.

2. Seat for children according to claim 1 characterized in that the ends of the two separable elements of the frame can be reciprocally engaged and are equipped with holes through which a check pin can be inserted.

3. Seat for children according to claim 1 characterized in that the devices for the accomplishment of the translation of the cushion of the said seat comprise a pin hinged on a side of the base element of the frame and extending on the other side to be manually rotated around said hinging; the pin freely goes through the projections of the cushion of the children seat, and sliding shoes along guides of the said base element of the frame are also foreseen.

4. Seat for children according to claim 1 characterized in that the devices for the variation of the inclination of the base frame consist of a handle hinged along the transversal axis at the front end of the base frame and it is equipped with clutch or teeth elements that allow the locking in the various rotated positions with respect to the frame.

Tav.I

Fig.1

Fig.1a

Fig.2

Fig.4

Fig.3

Tav. II

## Fig. 5

## Fig. 6

## Fig. 7

## Fig. 9

## Fig. 8